# EUROPEAN PATENT APPLICATION

(11) **EP 4 556 711 A1**
(43) Date of publication of application: **21.05.2025**
(21) Application number: 23383169.2
(22) Date of filing: 16.11.2023
(51) Int. Cl.: F03D 80/30

(54) **WIND TURBINE ROTOR BLADE IMPROVED FOR LIGHTNING PROTECTION**

(71) Applicant: Siemens Gamesa Renewable Energy Innovation & Technology S.L., 31621 Sarriguren (Navarra) (ES)
(72) Inventor: Hermoso, Francisco Javier, 31621 Sarriguren (Navarra-España) (ES); March Nomen, Victor, 08195 Sant Cugat del Valles (ES)
(74) Representative: SGRE-Association

(57) **Abstract**

It is described a rotor blade (100) for a wind turbine, comprising: a rotor blade wall (101) at a root end portion (102), wherein at an outer blade wall surface (103) and/or an inner blade wall surface (104) it is arranged: a lightning discharge conductor (105) connected to a lightning receptor (108) at, in particular a tip of, the rotor blade; a conductive member (106) electrically connectable to a hub (110); an insulating member (107) arranged at least partially between the lightning discharge conductor (105) and the conductive member (106).

## Description

### Field of invention

The present invention relates to a rotor blade of a wind turbine being improved regarding lightning protection. Further, the present invention relates to wind turbine equipment including the rotor blade and further relates to a wind turbine providing improved lightning protection.

### Art Background

EP 3 775 544 B1 discloses an electrical protection system for wind turbines. The electrical protection system allows transferring to the ground static electricity accumulated at the blades and current from a lightning when a lightning strikes onto the blades or the rotor.

It has been observed, that conventional wind turbines equipped with lightning protection systems cannot in all circumstances and conditions ensure that a lightning strike is discharged along a predetermined intended current discharge path. Thereby, conventionally, other components of the wind turbine, in particular a rotor blade bearing, may be deteriorated or damaged.

Thus, there may be a need for a rotor blade, there may be a need for a wind turbine equipment and there may be a need for a wind turbine wherein lightning protection is improved and wherein in particular a lightning caused electrical current is reliably guided via a predetermined discharge path without affecting or damaging components of the wind turbine.

### Summary of the Invention

This need may be met by the subject matter according to the independent claims. Advantageous embodiments of the present invention are described by the dependent claims.

According to an embodiment of the present invention it is provided a rotor blade for a wind turbine, comprising a rotor blade wall at a root end portion, wherein at an outer and/or an inner blade wall surface it is arranged: a lightning discharge conductor connected to a lightning receptor at, in particular a tip of, the rotor blade; a conductive member electrically connectable to a hub; and an insulating member arranged at least partially between the lightning discharge conductor and the conductive member.

An outer surface of the rotor blade wall may provide at least partially an aerofoil surface to which wind impacts causing rotation of a rotor at which plural rotor blades are connected. At the root end portion of the rotor blade, the rotor blade may be connectable (or connected in particular) to a hub which may be included in a nacelle. The hub may be mechanically connected to a rotation shaft which may be mechanically coupled to an electrical generator which produces electrical energy upon rotation of the rotor shaft. The root end portion may have substantially a cylindrical shape.

The components lightning discharge conductor, conductive member and insulating member may be arranged at an outer blade wall surface but not on an inner blade wall surface. In other embodiments, the lightning discharge conductor, the conductive member and the insulating member may all be arranged at an inner blade wall surface but not at an outer blade wall surface. According to further embodiments, for example a first lightning discharge conductor, a first conductive member and a first insulating member may all be arranged at an outer blade wall surface and additionally a second lightning discharge conductor, a second conductive member and a second insulating member may be arranged at an inner blade wall surface.

Further, it should be understood, that on the inner and/or outer blade wall surface, plural insulating members may be arranged in relation to potentially plural present lightning discharge conductors and plural conductive members.

The lightning discharge conductor may for example be configured as a metallic band attached to for example the outer surface of the rotor blade wall. A lightning strike may be or may strike at a lightning receptor which may for example be arranged exposed to the environment at a tip of the rotor blade. The received lightning strike may result in an electric current running from the lightning receptor to the connected lightning discharge conductor. Therefore, the lightning discharge conductor together with the electrically connected lightning receptor are provided for providing an intended or predetermined discharge current path for discharging any lightning strike in a secure manner. From the lightning discharge conductor, the lightning current may be guided for example via one or more spark paths to a grounding point which is connected to the nacelle.

It should be understood that the rotor blade may be configured to avoid any lightning discharge current to run or to be carried across a rotor blade bearing, since by the lightning current, the bearing may be damaged. In particular, the lightning strike may be prohibited to reach or run across to the conductive member which is electrically connected or connectable to the hub of the nacelle. The conductive member may be configured in different embodiments in different manners. The conductive member may be for example any metallic or electrically conductive component which may be installed to the blade surface for different reasons, for example for enforcement or the like.

The conductive member may be spatially relatively close to the lightning discharge conductor such that without the insulating member, there may be a risk that a spark develops when a lightning strikes and a lightning current is carried to the lightning discharge conductor involving increase of a voltage between the lightning discharge conductor and the conductive member. In order to reduce the risk or avoid that a discharge spark forms between the lightning discharge conductor and the conductive member, the insulating member is provided with the purpose of forming an electrical barrier or blocking member thereby reducing the risk that an electrical discharge spark forms between the lightning discharge conductor and the conductive member.

The insulating member may for example be axially (for example along a longitudinal axis of the rotor blade) arranged between the lightning discharge conductor and the conductive member. For example, the conductive member may be (axially) closer to a root end of the rotor blade than the lightning discharge conductor. By providing the insulating member it may be ensured that a lightning caused electrical current is guided via a predetermined intended discharge path and thereby prohibiting lightning current discharge via for example a rotor blade bearing.

Embodiments of the invention could be applied to new blades or blades installed on field, with contact and no contact lightning transmission systems to discharge the static charges and specially the lightning current to ground in a safe way with the target to insulate metallic parts, as reinforcements, bolts, electrical cabinets, metallic components, etc. especially when a no glued insulator could be made.

The number of insulators and its dimensions and shapes to install on the inner or/and outer surface of the blade is going to depend on the installation and the lighting transmission system seen as a whole.

According to an embodiment of the present invention, the insulating member is configured and arranged in order to increase a breakdown voltage, in particular by changing an air path (and/or a discharge by a surface of the blade (surface flashover)), between the lightning discharge conductor and the conductive member.

When the insulating member is arranged between the lightning discharge conductor and the conductive member, the breakdown voltage between the lightning discharge conductor and the conductive member is higher, in particular at least 1.5 to 5 times higher, then a breakdown voltage which would be present if the insulating member would be missing. In particular, when the insulating member is arranged between the lightning discharge conductor and the conductive member, the breakdown voltage between the lightning discharge conductor and the conductive member may be higher, in particular at least two times or three times higher than a breakdown voltage between the lightning discharge conductor and a terminal or an electrode to which any lightning current is intended to be guided in case of a lightning strike. Thereby, it may be ensured that the lightning caused electrical current is guided via an intended discharge path, thereby not affecting or deteriorating other wind turbine components.

According to an embodiment of the present invention, the insulating member is fixed at the respective wall surface using glue, in particular structural adhesive, wherein the glue in particular completely fills a space between the insulating member and the wall surface.

The structural adhesive may, while gluing the insulating member onto the blade wall surface, be partially liquid or may have a paste-like condition and may solidify after a particular time interval, in order to reliably and in an insulating manner fix the insulating member to the rotor blade surface. Typical bonding adhesives used for that purpose may be made of epoxy or polyurethane. These structural bonding adhesives usually present very good insulation properties.

When the insulating member is fixed to the wall surface using the glue, substantially no air path may be present between the insulating member and the wall surface. Thereby, an electrical discharge through the glue or the adhesive or through the insulating member may not be possible.

According to an embodiment of the present invention, insulating member protrudes from the respective wall surface in a direction transverse, in particular orthogonal, to the wall surface.

When the insulating member protrudes from the respective wall surface (i.e., inner wall surface or outer wall surface), a length of a potential spark path through the air is increased and thereby also increasing the breakdown voltage of an ionisation discharge. The protrusion height and/or the design of the insulating member may be adapted to the particular application, in particular in dependence of a geometry of the lightning discharge conductor and/or the conductive member. The protrusion height and/or the design or the insulating member may also be adapted in dependence of the expected lightning voltage through the lightning transmission system.

According to an embodiment of the present invention, a protrusion height and/or dimensions of the insulating member is larger than, in particular larger than one times or two times or three times, a (smallest) distance between the lightning discharge conductor and the conductive member, the protrusion height further in particular being between 3 and 25 cm.

When the protrusion height has the dimension as specified, the breakdown voltage may advantageously be increased to be (much) higher than a breakdown voltage across an intended lightning current discharge path.

According to an embodiment of the present invention, the insulating member extends substantially along a circumferential direction of the blade at the (respective) wall surface (e.g. covering more than the length of the lightning discharge conductor on the inner or/and the outer surface of the blade, depending on the breaking voltages to be protected), in particular as an arc segment having an arc length satisfying at least one of: the arc length is between 1/50 and 1/2 of a circumferential dimension of the wall surface; the arc length is between one times and ten times of a circumferential dimension of the lightning discharge conductor; the arc length is between 0.5 times and two times of a circumferential dimension of the conductive member.

Thereby, the insulating member may effectively prohibit any spark discharge between the lightning discharge conductor and the ground through the conductive member.

According to an embodiment of the present invention, the insulating member comprises at least one of the following properties: non-conductive, plastic, solid; wherein the insulating member comprises at least one of the following materials: nylon, polypropylene, polyamide, ceramics, epoxide, acrylamide, thermosetting material, thermoplastic material.

Thereby, the insulating member may effectively block any discharge between the lightning discharge conductor and the ground through the conductive member.

According to an embodiment of the present invention, the insulating member comprises a wall contact portion (e.g. having one or more faces depending on the design), in particular being in contact with the wall surface via the glue, and at least one protruding portion, in particular breakdown voltage enhancing portion, protruding from the wall contact portion away from the wall surface.

The wall contact portion may be in contact with the glue or the adhesive which may in turn be in contact with the blade wall surface. The wall contact portion may ensure a reliable fixation of the insulating member at the blade wall surface.

According to an embodiment of the present invention, the protruding portion comprises at least one separation member and/or barrier member and/or blocking member prohibiting and/or deteriorating and/or extending a spark path from the lightning discharge conductor and the conductive member.

The protruding portion may comprise one or plural separation members or barrier members, in order to still further increase the resistance of electrical resistance (impedance) between the lightning discharge conductor and the conductive member. The design and shape of the protruding portion may be adapted in dependence of the application and circumstances.

According to an embodiment of the present invention, a separation member of the protruding portion comprises substantially a plate shaped arc section having a thickness of between 0.5 and 2 cm.

According to an embodiment of the present invention, the conductive member comprises a structural reinforcement member close to a root of the blade, the reinforcement member in particular being formed of a curved metal plate or sheet bolted to the blade wall.

A structural reinforcement member may be provided either only at an outer rotor blade surface or an inner rotor blade surface or on both an outer rotor blade surface and an inner rotor blade surface. Thereby, the structural rigidity or strength of the rotor blade in particular at the root portion may be enhanced while at the same time discharge of any lightning current across an intended discharge path may be ensured.

According to an embodiment of the present invention it is provided a wind turbine equipment comprising: a nacelle including a hub; at least one rotor blade according to any one of the preceding embodiments connected via a blade bearing at a root portion to the hub, wherein the conductive member of the blade is electrically connected to the hub; a lightning protection/transmission system comprising: a lightning receptor arranged at an outer surface of the blade; the lightning discharge conductor of the blade being electrically connected to the lightning receptor and arranged at the outer blade wall surface at the root portion, the lightning discharge conductor comprising in particular a metallic band extending in a circumferential direction of the blade at the root portion; a lightning current receiving member non-electrically connected to the ground and to the lightning discharge conductor, in one or both sides, or electrically connected to the hub or the nacelle, wherein a spark path is provided between the lightning discharge conductor of the blade to the nacelle or ground by the lightning current receiving member, in particular for different rotor blade pitching angles; wherein the insulating member is configured such that a breakdown voltage between the lightning discharge conductor to ground by the conductive member is larger than a breakdown voltage between the lightning discharge conductor of the blade to the nacelle or ground by the lightning current receiving member.

It should be understood, that features, individually or in any combination, disclosed, described, explained or provided for a wind turbine blade may also be applied to a wind turbine equipment or to a wind turbine according to embodiments of the present invention and vice versa.

The nacelle may further harbour an electrical generator which may mechanically be coupled to the hub. The blade bearing may be provided in order to allow the rotor blade to adapt different blade pitch angles involving rotation about a substantially longitudinal axis of the rotor blade. The longitudinal axis of the rotor blade may substantially be orthogonal to a circumferential direction associated with the rotor blade. For pitching the rotor blade, the rotor blade may be rotated about the longitudinal axis which may substantially be a cylinder symmetry axis of the substantially cylindrical shaped root portion of the rotor blade.

The lightning receptor may comprise one or more receptor portions arranged at one or more environmentally exposed locations at an outer surface of the rotor blade, in particular at a tip of the rotor blade. A lightning strike current received at the lightning receptor or the lightning receptor portions may electrically be guided to the lightning discharge conductor for example by a rotor blade internal electrical conductor. A portion of the lightning discharge conductor may be provided inside the rotor blade at an inner blade wall and a portion of the lightning discharge conductor may be provided at an outer rotor blade.

The outer surface portion of the lightning discharge conductor may be formed as a metallic band extending in the circumferential direction (perpendicular to the longitudinal direction of the rotor blade). Due to the circumferentially extending metallic band, a spark path may be provided between the lightning discharge conductor (metallic band) and the lightning current receiving member for plural set pitching angles. When the breakdown voltage between the lightning discharge conductor and the conductive member is larger (e.g. at least two time, three times or at least ten times) than a breakdown voltage between the lightning discharge conductor and the lightning current receiving member, any lightning caused electrical current or voltage would then be discharged via forming a spark between the lightning discharge conductor and the lightning current receiving member rather than between the lightning discharge conductor and the conductive member. Thereby, components of the wind turbines may be prohibited or protected from damage.

According to an embodiment of the present invention, the rotor blade is connected to the hub via plural T-bolts and/or metallic inserts being e.g. parts of the conductive member of the blade. Thereby, a conventional fixing methodology may be supported while lightning discharge is via an intended discharge path.

According to an embodiment of the present invention it is provided a wind turbine comprising: a wind turbine tower; a wind turbine equipment according to any one of the preceding embodiments, wherein the nacelle is rotatably mounted at a top of the wind turbine tower.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a portion of a rotor blade according to an embodiment of the present invention;
Fig. 2 schematically illustrates a portion of an inner blade wall of a rotor blade according to an embodiment of the present invention;
Figs. 3 and 4 illustrate in a schematic manner a portion of a wind turbine equipment including a rotor blade according to an embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

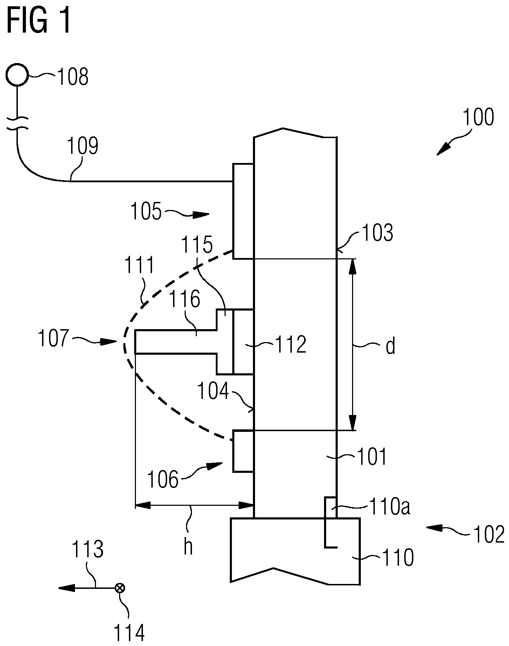

The portion of a rotor blade 100 according to an embodiment of the present invention illustrated in Fig. 1 includes a rotor blade wall 101 at a root end portion 102 of the rotor blade 100. The rotor blade wall 101 comprises an outer blade wall surface 103 and an inner rotor blade wall surface 104. In the embodiment illustrated in Fig. 1 at the inner blade wall surface 104, a lightning discharge conductor 105, a conductive member 106 and an insulating member 107 are arranged.

In other embodiments, (differently configured and/or shaped and/or designed) lightning discharge conductor, conductive member and insulating member may also be provided at the outer rotor blade wall surface 103.

In the illustrated embodiment, the lightning discharge conductor 105 is electrically connected to a lightning receptor 108 which may for example be arranged exposed to the environment at a not illustrated rotor blade tip. An electrical conductor 109 electrically connects the lightning receptor 108 and the lightning discharge conductor 105. Thus, when a lightning strikes the rotor blade at the lightning receptor 108, the lightning current and voltage is carried to the lightning discharge conductor 105.

The rotor blade 100 illustrated in Fig. 1 further comprises a conductive member 106 which is electrically connected to a hub 110 of a wind turbine nacelle. The rotor blade 100 is at the root portion 102 for example connected to the hub 110 via not in detail illustrated T-bolts 110a (or metallic inserts). The conductive member 106 may be any metallic part which may be provided close to the root end portion 102 of the rotor blade 100.

The rotor blade 100 further comprises the insulating member 107 which is arranged at least partially between the lightning discharge conductor 105 and the conductive member 106. The insulating member 107 is configured and arranged in order to increase a breakdown voltage for example across a potential discharge path 111 between the lightning discharge conductor 105 and the conductive member 106.

In the embodiment illustrated in Fig. 1, the insulating member 107 is fixed at the respective wall surface 104 using glue 112 which completely fills a space between the insulating member 107 and the wall surface 104.

As can be appreciated from Fig. 1, the insulating member 107 protrudes in a direction 113 transverse, in particular orthogonal, to the wall surface 104. The insulating member 107 in particular protrudes by a protrusion height h from the rotor blade surface 104. The protrusion height h may amount to for example one half to two times a smallest distance d between the lightning discharge conductor 105 and the conductive member 106.

The insulating member 107 extends substantially along a circumferential direction 114 which is orthogonal to the drawing page of Fig. 1.

As can be appreciated from Fig. 1, the insulating member 107 comprises a wall contact portion 115 which is in contact with the wall surface 104 via the glue 112 and further comprises at least one protruding portion 116 which protrudes from the wall contact portion 115 away from the wall surface 104. In the embodiment illustrated in Fig. 1, the protruding portion 116 comprises one separation member, while in other embodiments, the protruding portion 116 may comprise more than one separation member, in order to in particular increase the length of the potential discharge path 111 and thereby increase the breakdown voltage.

The conductive member 106 may for example comprise a structural reinforcement member close to the root portion 102 of the rotor blade 100.

Embodiments of the present invention support insulation of new metallic components on the blade surface and especially close to the lightning transmission or protection system. Those metallic components could or have in conventional systems compromised the defined lightning transmission path, because of the lower impedance with the new parallel circuit is offering to the lightning current.

According to embodiments of the present invention it is proposed to insulate these metal pieces or metallic components from the lightning transmission of the blade to the nacelle. Thereby, according to embodiments of the present invention, the insulating and fixing properties of glue (for example structural adhesive 112) is utilized together with a proper design of an insulator (for example insulating member 107). The design or shape of the new insulated system may be made in coordination with the impedance or the breaking voltage of the air gaps of the lightning transmission system from the blade to the nacelle or other metal pieces to evacuate to ground or to leakage current on the inner and/or outer surface of the blade. The glue (for example glue 112 illustrated in Fig. 1) is fixing the insulator (for example insulating member 107) to the inner and/or outer surface (e.g. 104, 103) of the blade and is also going to insulate the metallic parts below it against breaking voltages (through the material or its surface). Thereby, the thickness of the glue and its application ensuring no air gaps in the area of the glue is going to ensure the dielectric requirements that the system requires.

The insulator may be designed using insulating material like nylon or other plastics as also have been mentioned above. The dimensions and/or shapes of the insulator may be in coordination with the distances to insulate and the breaking voltages of the lightning transmission system of the blade.

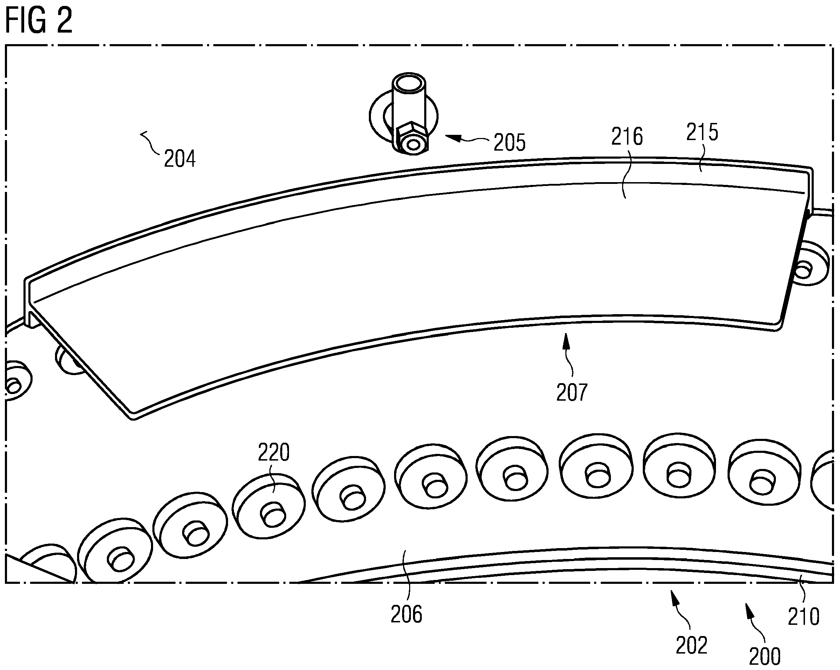

Figs. 2, 3 and 4 illustrate examples of rotor blades as provided according to embodiments of the present invention.

**Fig. 2** illustrates in a perspective view from the interior of the rotor blade an embodiment of a rotor blade 200, where an inner rotor blade wall surface 204 is provided with an insulating member 207. On the inner rotor blade surface 204, a lightning discharge conductor 205 as well as a conductive member 206 are arranged. Between the lightning discharge conductor 205 and the conductive member 206, the insulating member 207 is arranged.

Similarly as in the embodiment illustrated in Fig. 1, the insulating member 207 comprises a wall contact portion 215 and a protruding portion 216 protruding from the inner rotor blade surface 204.

The conductive member 206 may be a metallic reinforcement structure. In the embodiment illustrated in Fig. 2, the conductive member 206 is bolted to the rotor blade surface 204 using plural bolts 220. The lightning discharge conductor 205 may be connected to a lightning receptor (not shown) and may provide a conducting portion through the rotor blade wall (for example 101 illustrated in Fig. 1) to the outside of the rotor blade wall. Thus, the lightning discharge conductor 205 may be part of a lightning transmission system through the blade.

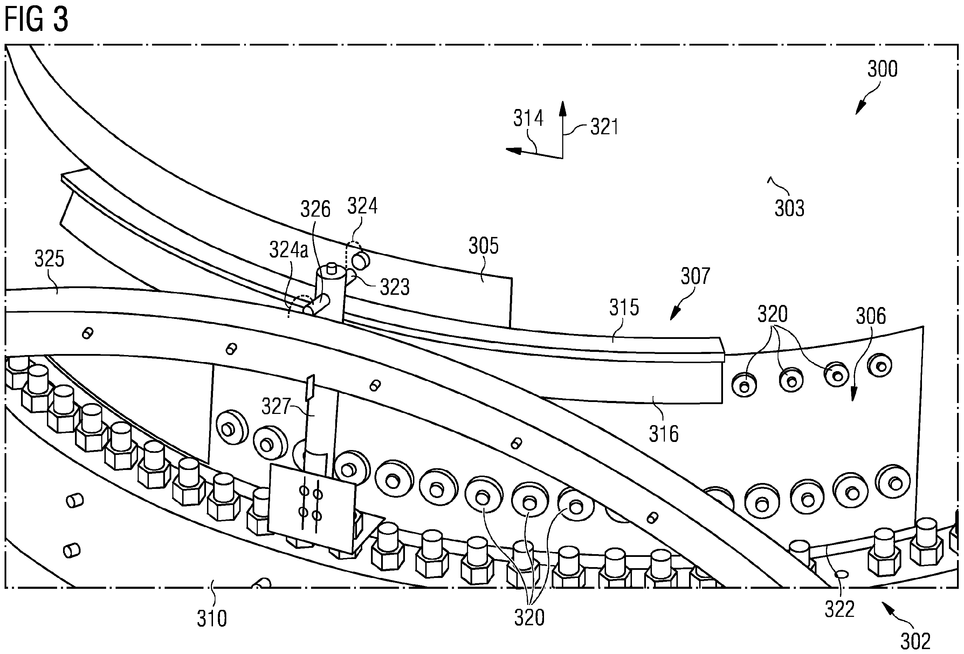

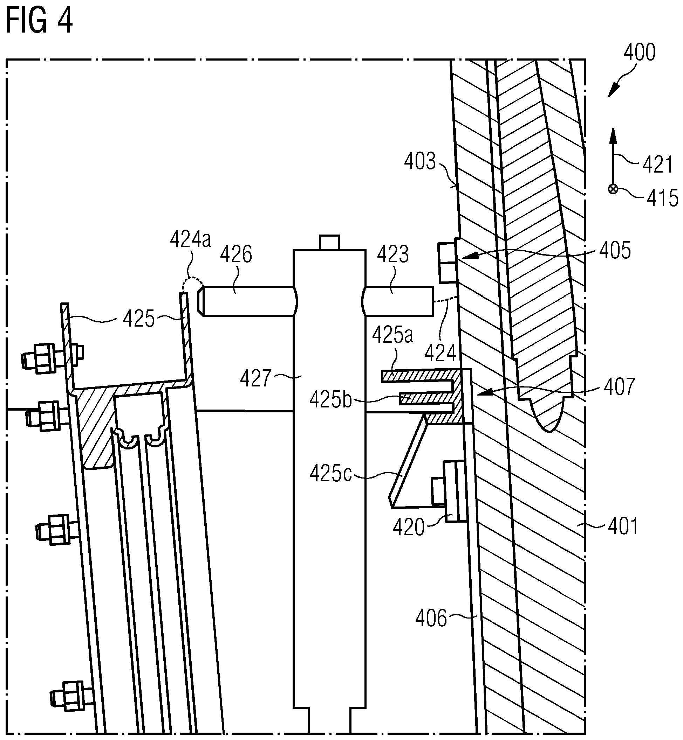

**Figs. 3** **and** **4** illustrate a rotor blade 300, 400 according to an embodiment of the present invention when coupled to a hub 321 of a nacelle. In the embodiment illustrated in Figs. 3 and 4, the rotor blade 300 comprises a lightning discharge conductor, a conductive member 306 as well as an insulating member 307, 407 at an outer rotor blade wall surface 303. As can be seen in Fig. 3, the conductive member 306 is arranged at the outer rotor blade surface 303 at a root end portion 302. Also, the conductive member 306 is bolted to the rotor blade outer surface 303 using plural bolts 320.

In the embodiment illustrated in Figs. 3 and 4, the lightning discharge conductor 305 is formed as a metallic band extending substantially in the circumferential direction 314 being perpendicular to a longitudinal direction 321 of the rotor blade 300. The lightning discharge conductor 305 is configured as a stainless steel band. The Figs. 3 and 4 in general illustrate wind turbine equipment including the rotor blade 300, 400.

The hub 310 is a portion of a not completely illustrated nacelle. Via a rotor blade bearing 322, the rotor blade 300 is at the root portion 302 connected to the hub 310. It should be appreciated that the conductive member 306 is electrically connected to the hub 310.

Embodiments of the present invention avoid any lightning stroke caused current to be guided via the conductive member 306 to the hub 310. The rotor blade 300 may comprise a lightning receptor (for example similar as the lightning receptor 108 illustrated in Fig. 1) which is arranged at an outer surface of the rotor blade. The lightning discharge conductor 305 is electrically connected to the lightning receptor and is arranged at the outer blade wall surface 303 at the root portion 302.

The wind turbine equipment illustrated in Fig. 3 further comprises a lightning current receiving member 323 and a conductive rod 326 which are non-electrically connected to the nacelle and to the lightning discharge conductor 305. However, a spark discharge path 324 is provided between the lightning discharge conductor 305 of the blade 300 and the lightning current receiving member 323, and a spark discharge path 324b is provided between the conductive rod 326 and the discharge ring 325.

The insulating member 307 is configured such that a breakdown voltage between the lightning discharge conductor 305 and the conductive member 306 is larger than a breakdown voltage between the lightning discharge conductor 305 of the blade and the discharge ring 325.

In the illustrated embodiment the member 323 is a conductor item (copper) insulated from ground; the member 323 does not touch the member 305. There is an air gap. The member 326 doesn't touch the member 325. There is an air gap. The member 323 and 326 are electrically connected. Both member, 323 and 326, are also insulated from the hub by a nylon piece 327. The members 323 and 326 are insulated from the ground, and the lightning and the static charges transmission from the blade to the nacelle is made by spark gaps 324, 324a.

In the embodiment illustrated in Figs. 3 and 4, the wind turbine equipment further comprises an electrically conductive ring 325 which is electrically connected to ground. Thus, a lightning current is discharged via the lightning discharge conductor 305, the lightning current receiving member 323, the conductive rod 326 to the discharge ring 325 (also referred to as gutter ring.

The embodiment illustrated in Figs. 3 and 4 represents the particular case of a no-contact lightning transmission between the blade and the nacelle or ground (because the nacelle is electrically connected to ground). There is an air gap between 325 and 326, and between 323 and 305. In other embodiments more or less air gaps or spark paths may be provided (e.g. 326 may directly electrically connected to 325) .

The member 323 and 326 (electrically in contact) are supported by an insulated holder 327 bolted to the hub, member 310.

**Fig. 4** illustrates an embodiment similar to the embodiment illustrated in Fig. 3 in a view substantially along the rotor blade outer surface 403. In the embodiment illustrated in Fig. 4, the insulating member 407 has a special shape or configuration. The insulating member 407 comprises three separation members 425a, 425b, 425c which all protrude from the rotor blade outer surface 403. Thereby, those barrier members 425a,b,c effectively prohibit that a spark path evolves (in case of a lightning strike) between the lightning discharge conductor 405 and the conductive member 406. Instead, in case of a lightning strike, the lightning caused current is carried via the lightning discharge conductor 405, the discharge spark 424, the lightning current receiving member 423, the rod 426 via discharge spark 424a to the discharge ring 425.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rotor blade (100) for a wind turbine, comprising:
a rotor blade wall (101) at a root end portion (102), wherein at an outer blade wall surface (103) and/or an inner blade wall surface (104) it is arranged:
a lightning discharge conductor (105) connected to a lightning receptor (108) at, in particular a tip of, the rotor blade;
a conductive member (106) electrically connectable to a hub (110);
an insulating member (107) arranged at least partially between the lightning discharge conductor (105) and the conductive member (106).

2. Rotor blade according to the preceding claim,
wherein the insulating member (107) is configured and arranged in order to increase a breakdown voltage, in particular by changing an air path (111), between the lightning discharge conductor (105) and the conductive member (106) .

3. Rotor blade according to any one of the preceding claims,
wherein the insulating member (107) is fixed at the respective wall surface using glue (112), in particular structural adhesive, wherein the glue in particular completely fills a space between the insulating member and the wall surface (104).

4. Rotor blade according to any one of the preceding claims,
wherein insulating member (107) protrudes from the respective wall surface in a direction transverse, in particular orthogonal (113) or parallel, to the wall surface (104) .

5. Rotor blade according to any one of the preceding claims,
wherein a protrusion height (h) of the insulating member is larger than, in particular larger than half times or three times, a distance (d) between the lightning discharge conductor (105) and the conductive member (106), the protrusion height further in particular being between 3 and 25 cm.

6. Rotor blade according to any one of the preceding claims,
wherein insulating member (107) extends substantially along a circumferential direction (114) of the blade (100) at the wall surface (104),
in particular as an arc segment having an arc length satisfying at least one of:
the arc length is between 1/50 and 1/2 of a circumferential dimension of the wall surface;
the arc length is between one times and ten times of a circumferential dimension of the lightning discharge conductor;
the arc length is between 0.5 times and two times of a circumferential dimension of the conductive member;

7. Rotor blade according to any one of the preceding claims, wherein the insulating member (107) comprises at least one of the following properties:
non-conductive, plastic, solid;
wherein the insulating member comprises at least one of the following materials:
nylon, polypropylene, polyamide, ceramics, epoxide, acrylamide, thermosetting material, thermoplastic material.

8. Rotor blade according to any one of the preceding claims,
wherein the insulating member (107) comprises a wall contact portion (115), in particular being in contact with the wall surface via the glue (112), and at least one protruding portion (116), in particular breakdown voltage enhancing portion, protruding from the wall contact portion away from the wall surface (104).

9. Rotor blade according to any one of the preceding claims, wherein the protruding portion (116) comprises at least one separation member (425a,b,c) and/or barrier member and/or blocking member prohibiting and/or deteriorating and/or extending a spark path from the lightning discharge conductor and the conductive member.

10. Rotor blade according to any one of the preceding claims, wherein a separation member (425a,b,c) of the protruding portion comprises substantially a plate shaped arc section having a thickness of between 0.5 and 2 cm.

11. Rotor blade according to any one of the preceding claims,
wherein the conductive member (106) comprises at least one or:
a structural reinforcement member close to a root of the blade, the reinforcement member in particular being formed of a curved metal plate or sheet bolted to the blade wall;
an electrical cabinet or device or item required to be insulated from the lightning transmission system or lightning path to ground, in particular contact or without contact systems.

12. Wind turbine equipment comprising:
a nacelle including a hub (110);
at least one rotor blade (100, 300, 400) according to any one of the preceding claims connected via a blade bearing (322) at a root portion (302) to the hub (310), wherein the conductive member (306) of the blade is connectable, in particular is electrically directly or indirectly connected, to the hub (310);
a lightning protection/transmission system comprising:
a lightning receptor (108) arranged at an outer surface of the blade;
the lightning discharge conductor (305) of the blade being electrically connected to the lightning receptor and arranged at the outer blade wall surface (303) at the root portion (302), the lightning discharge conductor (305) comprising in particular a metallic band extending in a circumferential direction (314) of the blade at the root portion;
a lightning current receiving member (323) and a lightning rod (326) as a portion of a contact and/or no contact lightning transmission system from the blade to ground, wherein a spark path (324) from the lightning discharge conductor (305) to the lightning current receiving member (323) and from the lightning rod (326) to ground are provided to transmit the static charges and the lightning current to the ground, in particular for different rotor blade pitching angles;
wherein the insulating member (307) is configured such that a breakdown voltage between the lightning discharge conductor (305) and the conductive member (306) is larger than a breakdown voltage between the lightning discharge conductor (305) of the blade and the nacelle structure or ground (325).

13. Wind turbine equipment according to the preceding claim, wherein the rotor blade is connected to the hub via plural T-bolts or inserts being parts of the conductive member of the blade.

14. Wind turbine comprising:
a wind turbine tower;
a wind turbine equipment according to any one of the preceding claims 12 or 13, wherein the nacelle is rotatably mounted at a top of the wind turbine tower.
